# EUROPEAN PATENT APPLICATION

(11) **EP 4 826 891 A1**
(43) Date of publication of application: **21.10.2026**
(21) Application number: 23961546.1
(22) Date of filing: 15.12.2023
(51) Int. Cl.: H01M 50/534, H01M 4/66, H01M 10/052, H01M 50/536

(54) **LITHIUM SECONDARY BATTERY**

(71) Applicant: TERAWATT TECHNOLOGY K.K., Yokohama-shi, Kanagawa 226-0026 (JP)
(72) Inventor: NAKANO, Masatsugu, Yokohama-shi, Kanagawa 226-0026 (JP); FUJIKI, Satoshi, Yokohama-shi, Kanagawa 226-0026 (JP)
(74) Representative: FRKelly
(86) International application number: PCT/JP2023/045122
(87) International publication number: WO 2025/126484

(57) **Abstract**

The present invention provides a lithium secondary battery having excellent cycle characteristics and excellent temperature stability of a tab. A lithium secondary battery comprising: a laminate including a plurality of negative electrodes, a plurality of separators, and a plurality of positive electrodes; a plurality of negative electrode tab lead portions extending from the laminate; and a negative electrode tab joined to the plurality of negative electrode tab lead portions, in which the negative electrode tab lead portion is a lead portion in which a negative electrode current collector constituting the negative electrode extends from the laminate, the negative electrode tab lead portion and the negative electrode current collector include a resin layer and a copper layer formed on both surfaces of the resin layer, in a 20 pattern of an X-ray diffraction measurement of the copper layer, there is a peak A at least at 42.9° or more and 43.9° or less, a ratio (B/A) of an intensity of a peak B at 50.0° or more and 51.0° or less to an intensity of the peak A is 0.3 or less, and a half-value width of the peak A is 0.2° or less.

## Description

### Technical Field

The present invention relates to a lithium secondary battery.

### Background Art

In recent years, a technique of converting natural energy such as sunlight or wind power into electrical energy has attracted attention. In association with this, various secondary batteries have been developed as a power storage device which has high safety and can store a large amount of electrical energy.

Among these, it is known that a lithium secondary battery that carries out charging/discharging by moving lithium ions between a positive electrode and a negative electrode exhibits a high voltage and a high energy density. As a typical lithium secondary battery, a lithium-ion secondary battery (lithium-ion battery: LIB) is known, which has an active material capable of holding a lithium element in a positive electrode and a negative electrode, and carries out charging/discharging by transferring lithium ions between the positive-electrode active material and the negative-electrode active material.

For example, Patent Literature 1 discloses a power storage device including an anode, a cathode, at least one separator provided between the anode and the cathode, an electrolyte, at least one thin film-shaped current collector which is in contact with at least one of the anode and the cathode, and at least one tab attached to the at least one thin film-shaped current collector, in which the tab is attached to the current collector through a connection means, the connection means electrically connects an exposed surface of the tab and the thin film-shaped current collector, any one of the anode and the cathode is interposed between at least a part of the thin film-shaped current collector and the separator, the current collector includes a conductive material that covers a non-conductive material substrate, and in an operation voltage of the power storage device, the current collector stops conduction during a short circuit, and the voltage is at least 2.0 volts.

In addition, Patent Literature 2 discloses a current collector having a multilayer structure in which an insulating layer is sandwiched between conductive layers, the current collector having a folded region in which an end portion of the current collector is folded back two or more times in the same direction, in which the conductive layers sandwiching the insulating layer in the folded region are electrically connected to each other, and inner surfaces of a current collector end portion forming the folded region are spaced apart from each other or partially in contact with each other.

In addition, Patent Literature 3 discloses a lithium-ion secondary battery including a positive electrode and a negative electrode, each of which is formed by attaching an active material to a current collector through a binder, in which at least one of the current collectors of the positive electrode and the negative electrode includes a low melting point layer consisting of a resin that melts during abnormal heat generation of the battery, and a metal layer interposed between the low melting point layer and the active material and exchanging charges with the active material. **Citation List**

### Patent Literatures

Patent Literature 1: PCT Japanese Translation Patent Publication No. 2022-527140
Patent Literature 2: Japanese Patent Application Laid-Open No. 2013-016321
Patent Literature 3: Japanese Patent Application Laid-Open No. H11-102711

### Summary of Invention

### Technical Problem

In the related art, a pure copper foil or a copper alloy foil is often used in a negative electrode in order to ensure conductivity. On the other hand, from the viewpoint of safety and lightness, a current collector film in which a metal layer is formed on both surfaces of a resin film is also often used in such current collectors as described in Patent Literatures 1 to 3. By the way, when a plurality of current collector leads consisting of such a current collector film is welded to a tab, the cycle characteristics of a lithium secondary battery may be deteriorated due to the welding strength of a welded portion, the connection resistance, or the like, and further, the temperature of the tab may increase during charging/discharging.

The present invention has been made in view of the above circumstances, and an object of the present invention is to provide a lithium secondary battery having excellent cycle characteristics and excellent temperature stability of a tab when the current collector film is subjected to ultrasonic welding.

### Solution to Problem

A lithium secondary battery according to one embodiment of the present invention includes a laminate including a plurality of negative electrodes, a plurality of separators, and a plurality of positive electrodes, a plurality of negative electrode tab lead portions extending from the laminate, and a negative electrode tab joined to the plurality of negative electrode tab lead portions, in which the negative electrode tab lead portion is a lead portion in which a negative electrode current collector constituting the negative electrode extends from the laminate, the negative electrode tab lead portion and the negative electrode current collector include a resin layer and a copper layer formed on both surfaces of the resin layer, in a 2θ pattern of an X-ray diffraction measurement of the copper layer, there is a peak A at least at 42.9° or more and 43.9° or less, a ratio (B/A) of an intensity of a peak B at 50.0° or more and 51.0° or less to an intensity of the peak A is 0.3 or less, and a half-value width of the peak A is 0.2° or less.

### Advantageous Effect of Invention

According to the present invention, it is possible to provide a lithium secondary battery having excellent cycle characteristics and excellent temperature stability of a tab.

### Brief Description of Drawings

[Figure 1] Figure 1 is a schematic view illustrating an example of a lithium secondary battery according to the present invention.
[Figure 2] Figure 2 is a schematic view illustrating an example of a negative electrode according to the present invention.
[Figure 3] Figure 3 is a schematic view illustrating an example of a cross section of the negative electrode according to the present invention.
[Figure 4] Figure 4 is a schematic view illustrating an example of joining of a negative electrode lead portion and a negative electrode tab in the lithium secondary battery according to the present invention.
[Figure 5] Figure 5 is a schematic view illustrating an example of joining of the negative electrode lead portion and the negative electrode tab in the lithium secondary battery according to the present invention.
[Figure 6] Figure 6 is a schematic view illustrating an example of joining of the negative electrode lead portion and the negative electrode tab in the lithium secondary battery according to the present invention.
[Figure 7] Figure 7 is a schematic view illustrating an example of the lithium secondary battery according to the present invention.
[Figure 8] Figure 8 illustrates a 2θ pattern of X-ray diffraction measurement of Example 3.
[Figure 9] Figure 9 illustrates a 2θ pattern of X-ray diffraction measurement of Example 4.
[Figure 10] Figure 10 illustrates a 2θ pattern of X-ray diffraction measurement of Example 5.
[Figure 11] Figure 11 illustrates a 2θ pattern of X-ray diffraction measurement of Comparative Example 4.

### Description of Embodiments

Hereinafter, embodiments for carrying out the present invention (hereinafter, simply referred to as "the present embodiment") will be described in detail. However, the present invention is not limited to the following present embodiments. The present invention can be modified in various ways without departing from the gist thereof. It is noted that, in the drawings, the same elements will be denoted by the same reference numerals, and redundant descriptions thereof will be omitted. In addition, positional relationships such as up, down, left, and right are based on the positional relationships illustrated in the drawings unless otherwise specified. Further, the dimensional ratios in the drawings are not limited to the illustrated ratios.

### 1. Lithium secondary battery

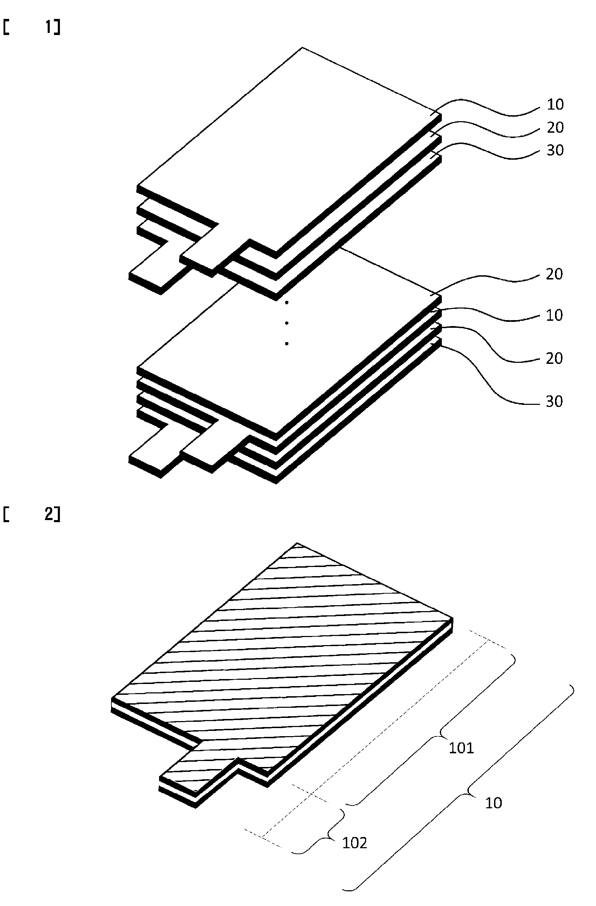

A basic configuration of a lithium secondary battery according to one embodiment of the present invention will be described with reference to Figure 1. As illustrated in Figure 1, the lithium secondary battery according to one embodiment of the present invention includes a plurality of negative electrodes 10, a plurality of separators 20, and a plurality of positive electrodes 30, and the negative electrode 10 and the positive electrode 30 are disposed to be spaced apart from each other with the separator 20 being interposed therebetween. Hereinafter, each configuration will be described in detail.

### 1.1. Negative electrode

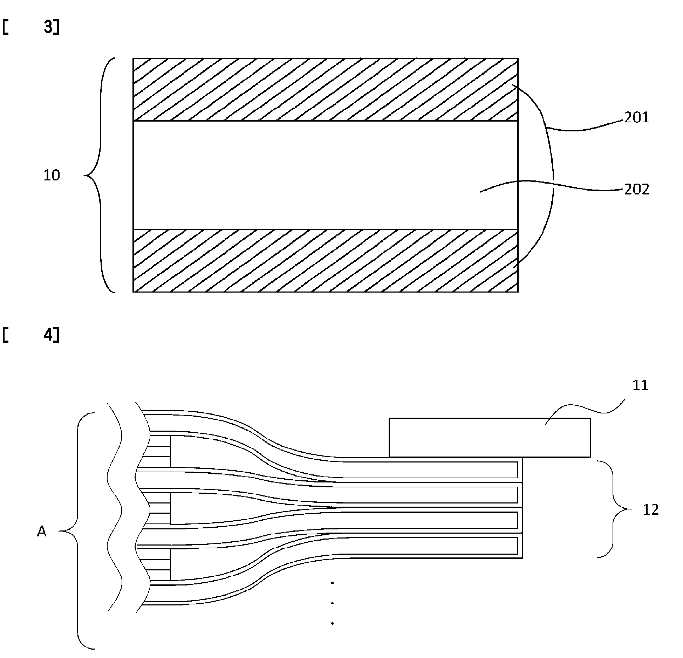

Figure 2 is a perspective view illustrating an example of the negative electrode 10 according to the present embodiment. As illustrated in Figure 2, the negative electrode 10 according to the present embodiment includes a negative electrode body portion 101 and a negative electrode tab lead portion 102, and the negative electrode tab lead portion 102 has a form in which a negative electrode current collector constituting the negative electrode 10 extends from the negative electrode body portion 101. The negative electrode 10 includes a negative electrode current collector, and may further include a negative-electrode active material. In addition, as illustrated in Figure 3, when the negative electrode 10 according to the present embodiment consists of only the negative electrode current collector, the negative electrode 10 is composed of a negative electrode current collector film including a resin layer 202 and copper layers 201 formed on both surfaces of the resin layer 202.

As illustrated in Figure 4, a negative electrode tab 11 is overlapped with a laminate 12 of negative electrode tab lead portions, which is obtained by collecting the negative electrode tab lead portions 102 which are the negative electrode-side end portions of a battery laminate A, and is joined by welding. Examples of the welding include ultrasonic welding, laser welding, resistance welding, spot welding, and the like, and among these, in the lithium secondary battery according to the present embodiment, ultrasonic welding is suitable and preferable since it is necessary to weld the laminate including the resin layer 202.

A lithium secondary battery according to the present embodiment includes a plurality of negative electrodes 10, the plurality of negative electrode tab lead portions 102 extending from the laminate, and the negative electrode tab 11 joined to the plurality of negative electrode tab lead portions, in which the negative electrode tab lead portion 102 is a lead portion in which a body portion of the negative electrode current collector constituting the negative electrode 10 extends from the laminate, the negative electrode body portion and the negative electrode tab lead portion 102 of the negative electrode current collector include a resin layer 202 and copper layers 201 formed on both surfaces of the resin layer 202, in a 2θ pattern of an X-ray diffraction measurement of the copper layer 201, there is a peak A at least at 42.9° or more and 43.9° or less, a ratio (B/A) of an intensity of a peak B at 50.0° or more and 51.0° or less to an intensity of the peak A is 0.3 or less, and a half-value width of the peak A is 0.2° or less.

In a lithium secondary battery configured as a laminate in which each constitutional element is laminated, the laminate of the negative electrode is joined to a tab terminal from a negative electrode lead portion of each negative electrode current collector to extract electricity from the lithium secondary battery. Here, as a method of joining the electrode lead portion to the tab terminal, ultrasonic welding, laser welding, resistance welding, spot welding, or the like is used, and when a current collector film including the resin layer 202 and the copper layers 201 formed on both surfaces of the resin layer 202 is used, ultrasonic welding is often used since energization does not occur in the resin layer 202.

By the way, the inventors of the present invention have confirmed that, even when ultrasonic welding is carried out under the same conditions, the connection resistance increases due to a cause such as partial welding depending on the specifications of the current collector film, and there is room for improvement in the performance of the lithium secondary battery and the temperature stability of the tab during charging/discharging. As a result of intensive studies on this point, it has been found that, in a 2θ pattern of an X-ray diffraction measurement of the copper layer 201, when there is a peak A at least at 42.9° or more and 43.9° or less, a ratio (B/A) of an intensity of a peak B at 50.0° or more and 51.0° or less to an intensity of the peak A is 0.3 or less, and a half-value width of the peak A is 0.2° or less, the performance of the lithium secondary battery is improved, and the temperature stability of the tab during charging/discharging is also improved. The factor is presumed as follows; however, it is not limited thereto.

The peak A is a peak indicating the orientation of a (111) plane in the copper layer 201, and the peak B is a peak indicating the orientation of a (200) plane. When the ratio of the intensity of the peak B to the intensity of the peak A is 0.3 or less and the half-value width of the peak A is 0.2° or less, the orientation and crystallinity of the (111) plane are maximized while the orientation of the (200) plane is suppressed. Since the (111) plane is a slip plane of copper having a face-centered cubic lattice structure, shear deformation or plastic deformation is likely to occur, and as a result, welding by transverse vibration of ultrasonic waves is advantageous, and it is presumed that the connection resistance between the negative electrode tab 11 and the negative electrode tab lead portion 102 is reduced. As a result, it is considered that the lithium secondary battery according to the present embodiment has excellent cycle characteristics and temperature stability of the tab during charging/discharging. However, the factor is not limited to the above-described factor.

In the present specification, the half-value width is a value of a width of 2θ at a height of exactly half of the maximum value of the peak in the 2θ pattern of the X-ray diffraction measurement, and in English, it is called Full Width Half Maximum and is referred to as FWHM.

The negative electrode current collector according to the present embodiment includes the resin layer 202 and the copper layers 201 formed on both surfaces of the resin layer 202. Figure 3 is a schematic view illustrating an example of a cross section of the negative electrode 10 including the resin layer 202 and the copper layers 201 formed on both surfaces of the resin layer 202.

The thickness of the negative electrode current collector film according to the present embodiment is preferably 2.2 µm or more and 30 µm or less, 3.0 µm or more and 15 µm or less, 3.5 µm or more and 13 µm or less, or 5.0 µm or more and 10 µm or less. By setting the thickness of the negative electrode current collector film within the above-described range, the ease of ultrasonic welding is improved, and the cycle characteristics of the battery and/or the temperature stability of the tab tend to be improved.

It is preferable that the resin layer 202 includes at least one selected from the group consisting of polyethylene terephthalate (PET), polypropylene, polyamide, acrylic resin, polycarbonate, polyethylene, polyvinyl chloride, and polystyrene. In addition, the resin layer 202 is more preferably formed of polyethylene terephthalate or polypropylene. By using the above-described resin layer 202, the ease of ultrasonic welding is improved, and the cycle characteristics of the battery and/or the temperature stability of the tab tend to be improved.

The resin layer 202 is preferably in a film shape (sheet shape), and the thickness thereof is preferably 2.0 µm or more and 20 µm or less, 3.0 µm or more and 10 µm or less, or 4.0 µm or more and 7.0 µm or less. By setting the thickness of the resin layer 202 within the above-described range, the ease of ultrasonic welding is improved, and the cycle characteristics of the battery and/or the temperature stability of the tab tend to be improved.

In the negative electrode current collector according to the present embodiment, the copper (Cu) layer 201 is formed as a conductive layer on both surfaces of the resin layer 202. The copper layer 201 according to the present embodiment refers to a copper layer in which the content of the Cu element in the layer is 99% by mass or more, 99.9% by mass or more, 99.99% by mass or more, or 99.9999% by mass or more.

In the 2θ pattern of the X-ray diffraction measurement of the copper layer 201, there is a peak A at least at 42.9° or more and 43.9° or less; however, there may be a peak A at 43.0° or more and 43.8° or less or 43.1° or more and 43.7° or less. The fact that the copper layer 201 has the peak A means that the (111) plane is formed. In addition, in the copper layer 201, the half-value width of the peak A is 0.2° or less, preferably less than 0.2°, and more preferably 0.18° or less. The fact that the half-value width is within this range means that the crystallinity of the (111) crystal plane is high, and by using the negative electrode current collector including the copper layer 201 exhibiting such orientation, the cycle characteristics of the battery and the temperature stability of the tab are improved.

In addition, in the 2θ pattern of the copper layer 201, the ratio (B/A) of the intensity of the peak B at 50.0° or more and 51.0° or less to the intensity of the peak A is 0.3 or less, preferably 0.25 or less, and more preferably 0.2 or less. The fact that the intensity ratio (B/A) is 0.3 or less means that the orientation of the (111) plane is extremely superior to that of the (200) plane, and by using the negative electrode current collector including the copper layer 201 exhibiting such orientation, the cycle characteristics of the battery and the temperature stability of the tab are improved. It is noted that the position of the peak B may be 50.1° or more and 50.9° or less, or may be 50.2° or more and 50.8° or less.

In the copper layer 201, the half-value width of the peak B is preferably 0.5° or less, 0.3° or less, 0.2° or less, or 0.15° or less. When the half-value width of the peak B is within the above-described range, the cycle characteristics of the battery and the temperature stability of the tab tend to be further improved. In addition, the half-value width of the peak B may be 0.05° or more, or may be 0.1° or more.

In the copper layer 201, the ratio (C/A) of the intensity of a peak C at 73.7° or more and 74.7° or less to the intensity of the peak A is preferably 0.3 or less, more preferably 0.25 or less, still more preferably 0.15 or less, even still more preferably 0.12 or less, and particularly preferably 0.1 or less. The fact that the intensity ratio (C/A) is 0.3 or less means that the orientation of the (111) plane is extremely superior to that of the (220) plane, and by using the negative electrode current collector including the copper layer 201 exhibiting such orientation, the cycle characteristics of the battery and the temperature stability of the tab tend to be further improved. It is noted that the position of the peak C may be 73.8° or more and 74.6° or less, or may be 73.9° or more and 74.5° or less.

It is noted that the X-ray diffraction measurement may be carried out by a known method in the related art using a commercially available X-ray diffraction measurement device. For example, it is considered to carry out the measurement using "RINT-Ultima" (X-ray diffraction device) manufactured by Rigaku Corporation, with CuKα rays as an X-ray source.

The thickness per layer of the copper layer 201 is preferably 0.2 µm or more and 10 µm or less, 0.3 µm or more and 5.0 µm or less, 0.5 µm or more and 3.0 µm or less, or 0.8 µm or more and 2.0 µm or less. By setting the thickness per layer of the copper layer 201 within the above-described range, the cycle characteristics of the battery and/or the temperature stability of the tab tend to be improved.

In the negative electrode current collector film according to the present embodiment, the total thickness of the copper layer 201 with respect to the thickness of the resin layer 202 is preferably 0.1 or more and 1.0 or less, 0.2 or more and 0.6 or less, or 0.35 or more and 0.5 or less. By setting the ratio of the thickness of the copper layer 201 to the thickness of the resin layer 202 within the above-described range, the cycle characteristics of the battery and/or the temperature stability of the tab tend to be improved.

A method for producing the negative electrode current collector film according to the present embodiment is not particularly limited as long as a current collector film having the above-described characteristics can be obtained, and a manufactured product may be used or the current collector film may be produced by a known method in the related art. Examples of the known method include a method of forming the copper layer 201 by carrying out sputtering or vapor deposition on both surfaces of a base film (resin sheet) serving as the resin layer 202.

In addition, for example, a method of further growing the copper layer 201 by an electroplating treatment after carrying out sputtering or vapor deposition on both surfaces of the base film is considered. When this method is used, for example, in the sputtering, when the target output is increased, the orientation of the (111) plane tends to be increased, and the crystallinity of the (111) plane tends to be increased. Therefore, in the present embodiment, it is considered that the target output needs to be neither too high nor too low.

In addition, in the vapor deposition, when the copper purity of the raw material to be used is increased, the orientation tends to be decreased. Therefore, in the present embodiment, it is considered that copper having a not-too-high purity needs to be used. Further, when the vapor deposition rate is increased and the cooling temperature is decreased, the orientation tends to be decreased. Therefore, in the present embodiment, it is considered that the vapor deposition rate needs to be adjusted not to be too high and the cooling temperature needs to be adjusted not to be too low.

It is noted that the current collector film may be produced by a method described in Examples later.

The negative-electrode active material is a material that causes an electrode reaction, that is, an oxidation reaction and a reduction reaction, in the negative electrode 10. Specifically, examples of the negative-electrode active material according to the present embodiment include a lithium metal and a host material for a lithium element (lithium ion or lithium metal). The host material for a lithium element means a material provided to hold a lithium ion or a lithium metal in the negative electrode 10. Examples of such a holding mechanism include intercalation, alloying, occlusion of a metal cluster, and the like, and typically, the holding mechanism is intercalation.

The negative-electrode active material is not particularly limited, and examples thereof include a lithium metal, an alloy containing a lithium metal, a carbon-based substance, a metal oxide, a metal to be alloyed with lithium, an alloy containing the metal, and the like. The carbon-based substance is not particularly limited, and examples thereof include graphene, graphite, hard carbon, carbon nanotube, and the like. The metal oxide is not particularly limited, and examples thereof include a titanium oxide-based compound, a cobalt oxide-based compound, and the like. The metal to be alloyed with lithium is not particularly limited, and examples thereof include silicon, germanium, tin, lead, aluminum, and gallium.

The lithium secondary battery according to the present embodiment may be an anode-free battery that substantially does not contain a negative-electrode active material, or may contain a negative-electrode active material.

The anode-free lithium secondary battery consists of a negative electrode current collector since the negative electrode 10 does not have a negative-electrode active material. After the initial charging, a lithium metal is deposited on the negative electrode 10, and the deposited lithium metal is electrolytically dissolved to carry out charging/discharging. As a result, the anode-free battery has an advantage that the energy density is theoretically high since the volume occupied by the negative-electrode active material and the mass of the negative-electrode active material are reduced, and the volume and mass of the entire battery are reduced.

### 1.2. Negative electrode tab

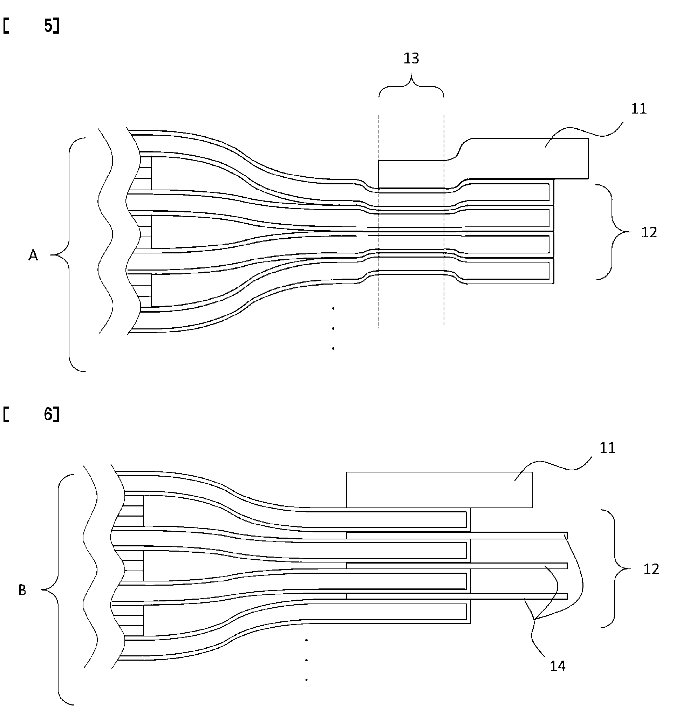

When the negative electrode tab 11 and the laminate 12 of the negative electrode tab lead portions are joined by ultrasonic welding, the ultrasonic welding may be carried out while carrying out pressurization. When the ultrasonic welding is carried out while carrying out pressurization, for example, as illustrated in Figure 5, heat is generated in a negative electrode tab joining portion 13, and the portion of the negative electrode tab joining portion 13 tends to be thinner.

As illustrated in Figure 6, it is preferable that the negative electrode tab 11 is overlapped with the laminate 12 of the negative electrode tab lead portions obtained by collecting the negative electrode tab lead portions 102 with the auxiliary metal foils 14 sandwiched therebetween which are the negative electrode-side end portions of the battery laminate B, and is joined by welding. By sandwiching the auxiliary metal foil 14, the thickness of the copper layer 201 which is thinned by the ultrasonic welding can be replenished, and the conductivity tends to be easily maintained. The auxiliary metal foil 14 is not particularly limited, and examples thereof include an electrolytic copper foil.

The negative electrode tab 11 may be formed of, for example, at least one material selected from the group consisting of copper, titanium, stainless steel, nickel, and alloys thereof. The negative electrode tab 11 is preferably formed of at least one material selected from the group consisting of copper, nickel, and alloys thereof, and more preferably copper plated with nickel.

The thickness of the negative electrode tab 11 is preferably 0.1 mm or more and 0.5 mm or less, or 0.2 mm or more and 0.4 mm or less. By setting the thickness of the negative electrode tab 11 within the above-described range, the cycle characteristics of the lithium secondary battery and the temperature stability of the tab tend to be further improved.

### 1.3. Separator

The separator 20 according to the present embodiment is not particularly limited as long as it has a function of physically and/or electrically isolating the positive electrode 30 and the negative electrode 10 and a function of ensuring ionic conductivity of lithium ions. Examples of such a separator include an insulating porous member, a polymer electrolyte, a gel electrolyte, and an inorganic solid electrolyte, and typical examples thereof include at least one selected from the group consisting of a porous member having insulating properties, a polymer electrolyte, and a gel electrolyte. In addition, as the separator 20, one type of member may be used alone, or two or more types of members may be used in combination.

As the separator 20, the insulating porous member, the polymer electrolyte, or the gel electrolyte is preferably used alone or in a combination of two or more types thereof. It is noted that, when the insulating porous member is used alone as the separator 20, the lithium secondary battery needs to further include an electrolyte solution.

The polymer electrolyte is not particularly limited, and examples thereof include a solid polymer electrolyte mainly including a polymer and an electrolyte, and a semi-solid polymer electrolyte mainly including a polymer, an electrolyte, and a plasticizer.

The gel electrolyte is not particularly limited, and examples thereof include a gel electrolyte mainly including a polymer and a liquid electrolyte (that is, a solvent and an electrolyte).

The polymer that can be included in the polymer electrolyte and the gel electrolyte is not particularly limited, and examples thereof include a polymer including a functional group including an oxygen atom, such as an ether and an ester, a halogen group, and a polar group such as a cyano group. Specific examples thereof include a resin having an ethylene oxide unit in a main chain and/or a side chain, such as polyethylene oxide (PEO), a resin having a propylene oxide unit in a main chain and/or a side chain, such as polypropylene oxide (PPO), an acrylic resin, a vinyl resin, an ester resin, a nylon resin, polyvinylidene fluoride (PVdF), polyacrylonitrile (PAN), polysiloxane, polyphosphazene, polymethyl methacrylate, polyamide, polyimide, aramid, and polytetrafluoroethylene. Such a resin as described above may be used alone or in a combination of two or more types thereof.

Examples of the electrolytes included in the polymer electrolyte and the gel electrolyte include salts of Li, Na, K, Ca, Mg, and the like. Typically, in the present embodiment, the polymer electrolyte and the gel electrolyte include a lithium salt. The lithium salt is not particularly limited, and may be any lithium salt which can be contained in the electrolyte solution described below. Such a salt or lithium salt may be used alone or in a combination of two or more types thereof.

A blending ratio of the polymer and the lithium salt in the polymer electrolyte and the gel electrolyte may be determined by a ratio of the polar group included in the polymer to the lithium atom included in the lithium salt. For example, when the polymer has an oxygen atom, the blending ratio may be determined by a ratio ([Li]/[O]) of the number of lithium atoms included in the lithium salt to the number of oxygen atoms included in the polymer. In the polymer electrolyte and the gel electrolyte, the blending ratio of the polymer and the lithium salt can be adjusted so that the above-described ratio ([Li]/[O]) is, for example, 0.02 or more and 0.20 or less, 0.03 or more and 0.15 or less, or 0.04 or more and 0.12 or less.

The solvent included in the gel electrolyte is not particularly limited, and for example, one type of solvent that can be included in the electrolyte solution described below can be used alone, or two or more types thereof can be used in combination. Preferred examples of the solvent are also the same as those in the electrolyte solution described below.

The plasticizer included in the semi-solid polymer electrolyte is not particularly limited, and examples thereof include the same components as the solvents that can be included in the gel electrolyte and various oligomers.

When the separator 20 includes an insulating porous member, the pores of the member are filled with a substance having ionic conductivity, whereby the member exhibits ionic conductivity. As a result, in the present embodiment, the pores thereof are filled with, for example, the electrolyte solution according to the present embodiment, the gel electrolyte including the electrolyte solution according to the present embodiment, or the like.

The material constituting the insulating porous member is not particularly limited, and examples thereof include an insulating polymer material. Specific examples thereof include polyethylene (PE) and polypropylene (PP). That is, the separator 20 may be a porous polyethylene (PE) film, a porous polypropylene (PP) film, or a laminated structure thereof.

### 1.4. Positive electrode

The positive electrode 30 according to the present embodiment has a positive electrode current collector and a positive-electrode active material layer. The average thickness of the positive electrode 30 is not particularly limited, and is, for example, 20 µm or more and 100 µm or less, 30 µm or more and 80 µm or less, or 40 µm or more and 70 µm or less. However, the average thickness of the positive electrode 30 can be appropriately adjusted according to the desired capacity of the battery.

### 1.4.1. Positive electrode current collector

The positive electrode current collector according to the present embodiment may have a positive electrode current collector film including a resin layer containing polyethylene terephthalate and metal layers provided on both surfaces of the resin layer, or may have a metal layer without having the resin layer. When the positive electrode current collector film is provided, the metal layer is formed by carrying out bonding on the surfaces on both sides of the resin layer by vapor deposition, sputtering, electroplating, an adhesive, or the like.

The resin layer of the positive electrode current collector is an insulator, and prevents the metal layers provided on both surfaces of the resin layer from being conductive to each other. The resin constituting the resin layer is not particularly limited, and may be formed of, for example, a sheet-shaped (film-shaped) or fibrous resin. The resin may include at least one selected from the group consisting of polyethylene terephthalate (PET), polypropylene, polyamide, acrylic resin, polycarbonate, polyethylene, polyvinyl chloride, and polystyrene. The above-described resin may be used alone or in a combination of two or more types thereof.

The resin layer of the positive electrode current collector may appropriately contain other additives according to desired physical properties, in addition to the above-described resin. The additive is not particularly limited, and examples thereof include a coloring agent, a flame retardant, a surfactant, and the like.

The thickness of the resin layer of the positive electrode current collector is, for example, 2 µm or more and 15 µm or less, 3 µm or more and 12 µm or less, or 4 µm or more and 10 µm or less.

The metal layer of the positive electrode current collector functions to be in physical and/or electrical contact with the positive-electrode active material layer and to transfer electrons to and from the positive-electrode active material layer. The metal layer of the positive electrode current collector is formed of a conductor such as a metal that does not react with lithium in the battery. The metal constituting the metal layer of the positive electrode current collector is not particularly limited, and is at least one selected from the group consisting of aluminum, titanium, stainless steel, nickel, and alloys thereof. Among these, aluminum or an aluminum alloy is preferable, and aluminum is particularly preferable. The metal may be used alone or in a combination of two or more types thereof. It is noted that, in the present specification, the "metal that does not react with lithium" means a metal that does not form an alloy by reacting with lithium ions or lithium metal under the operating conditions of the lithium secondary battery.

When the positive electrode current collector has the positive electrode current collector film, the thickness of the metal layer is not particularly limited, and is, for example, 0.1 µm or more and 4.0 µm or less, 0.2 µm or more and 3.0 µm or less, 0.3 µm or more and 2.5 µm or less, or 0.4 µm or more and 2.0 µm or less.

When the positive electrode current collector has the metal layer without having the resin layer, the thickness of the metal layer is not particularly limited, and is, for example, 4.0 µm or more and 20.0 µm or less, 6.0 µm or more and 17.5 µm or less, or 8.0 µm or more and 15.0 µm or less.

### 1.4.2. Positive-electrode active material

The positive-electrode active material is a material that causes an electrode reaction, that is, an oxidation reaction and a reduction reaction, in the positive electrode 30. The positive-electrode active material according to the present embodiment is not particularly limited, and for example, the positive-electrode active material is contained in a positive-electrode active material composition containing a binder, a conductive auxiliary agent, a positive-electrode sacrificial agent, and other additives, and the positive-electrode active material composition is applied onto at least one surface or both surfaces of the positive electrode current collector and subjected to press molding to dispose the positive-electrode active material layer on at least one surface or both surfaces of the positive electrode current collector.

The method of disposing the positive-electrode active material layer on the positive electrode current collector is not limited to press molding, and examples thereof include a method of curing the positive-electrode active material composition by heating the positive-electrode active material composition containing a thermosetting compound, a method of curing the positive-electrode active material composition by irradiating the positive-electrode active material composition containing a photocurable compound with light, a method of curing the positive-electrode active material composition by subjecting the positive-electrode active material composition to two-liquid mixing as a two-liquid curable composition, and the like.

The positive-electrode active material layer according to the present embodiment may contain one or more compounds represented by General Formula: Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B).

In addition, preferably, the positive-electrode active material layer contains one or more compounds represented by General Formula: Li_{z}NiₓCo_{y}M_{1-x-y}O_{2+α} (here, 0.7 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B). By containing the above-described compound having a high nickel ratio as the positive-electrode active material, the energy density of the lithium secondary battery tends to be further improved. In addition, when the nickel ratio is increased, the redox shuttle reaction is more likely to occur; however, the reaction is suppressed when the electrolyte solution contains the additive described in detail below, and the excellent performance stability at a high temperature tends to be exhibited.

The positive-electrode active material may contain other positive-electrode active materials in addition to the above-described compound. Specifically, examples of the other positive-electrode active materials according to the present embodiment include a host material for a lithium element (typically, a lithium ion). Such other positive-electrode active materials are not particularly limited, and examples thereof include a metal oxide and a metal phosphate. The metal oxide is not particularly limited, and examples thereof include a cobalt oxide-based compound, a manganese oxide-based compound, a nickel oxide-based compound, and the like. The metal phosphate is not particularly limited, and examples thereof include an iron phosphate-based compound and a cobalt phosphate-based compound. Typical examples of the other positive-electrode active materials include LiCoO₂, LiNiₓMn_{y}O (x + y = 1), LiNiO₂, LiMn₂O₄, LiFePO, LiCoPO, LiFeOF, LiNiOF, and TiS₂. The other positive-electrode active materials may be used alone or in a combination of two or more types thereof.

The positive-electrode active material composition may contain a binder. When the binder is contained, the positive-electrode active material layer is easily bound to the positive electrode current collector, and the flexibility is improved after the positive-electrode active material layer is disposed on the positive electrode current collector.

The binder according to the present embodiment is not particularly limited, and examples thereof include polyvinylidene fluoride; modified polyvinylidene fluoride in which a functional group such as a hydroxyl group, an amino group, a carbonyl group, a carboxyl group, a phenyl group, or a methyl group is introduced into polyvinylidene fluoride; polytetrafluoroethylene; modified polytetrafluoroethylene in which a functional group such as a hydroxyl group, an amino group, a carbonyl group, a carboxyl group, a phenyl group, or a methyl group is introduced into polytetrafluoroethylene; a block copolymer, a random copolymer, or a graft copolymer, which has tetrafluoroethylene as a constitutional unit; styrene-butadiene rubber; carboxymethyl cellulose; an acrylic resin; a polyimide resin; and the like. The binder may be used alone or in a combination of two or more types thereof.

The positive-electrode active material composition according to the present embodiment may contain a positive-electrode sacrificial agent. The positive-electrode sacrificial agent according to the present embodiment is a lithium-containing compound that causes an oxidation reaction in a charge/discharge potential range of the positive-electrode active material and substantially does not cause a reduction reaction. The positive-electrode sacrificial agent is not particularly limited, and examples thereof include a lithium oxide such as Li₂O₂; a lithium nitride such as Li₃N; a lithium sulfide-based solid solution such as Li₂S-P₂S₅, Li₂S-LiCl, Li₂S-LiBr, and Li₂S-LiI; and an iron-based lithium oxide such as Li₁₊ₓ(Ti_{1-y}Fe_{y})₁₋ₓO₂ (0 < x ≤ 0.25, 0.4 < y ≤ 0.9), Li₂₋ₓTi_{1-z}Fe_{z}O_{3-y} (0 ≤ x < 2, 0 ≤ y ≤ 1, 0.05 ≤ z ≤ 0.95), and Li₅FeO₄, and the like. The positive-electrode sacrificial agent may be used alone or in a combination of two or more types thereof.

### 1.5. Positive electrode tab

The positive electrode tab is overlapped with a laminate of positive electrode tab lead portions, which is obtained by collecting positive electrode tab lead portions which are the positive electrode-side end portions, and is joined by welding. Examples of the welding include ultrasonic welding, laser welding, resistance welding, spot welding, and the like. When the positive electrode tab lead portion includes a resin layer, ultrasonic welding is suitable.

The positive electrode tab may be formed of, for example, aluminum or an aluminum alloy. In one example, the positive electrode tab may be formed of hard aluminum. The thickness of the positive electrode tab may be, for example, 0.05 mm or more and 1 mm or less, or 0.1 mm or more and 0.5 mm or less.

### 1.6. Electrolyte solution

The lithium secondary battery may contain an electrolyte solution. The electrolyte solution is a liquid containing a solvent and an electrolyte, and has ionic conductivity. The electrolyte solution may be referred to as a liquid electrolyte, and acts as a conduction path for lithium ions. Therefore, when the lithium secondary battery has the electrolyte solution, the internal resistance is reduced, and the energy density, the capacity, and the cycle characteristics can be improved.

The electrolyte solution is, for example, a solution with which a housing (pouch) of the lithium secondary battery is filled. In addition, the electrolyte solution may be infiltrated into the separator 20, and may constitute a polymer electrolyte or a gel electrolyte by being held in a polymer.

The electrolyte contained in the electrolyte solution may be any lithium salt. The lithium salt may be, for example, one type or a combination of two or more types selected from the group consisting of LiI, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(C₂O₄)₂, LiB(O₂C₂H₄)F₂, LiB(OCOCF₃)₄, LiNO₃, and Li₂SO₄.

As the solvent contained in the electrolyte solution, for example, a non-aqueous solvent having a fluorine atom (hereinafter, referred to as "fluorinated solvent") and a non-aqueous solvent having no fluorine atom (hereinafter, referred to as "non-fluorine solvent") may be added.

Examples of the fluorinated solvent include 1,1,2,2-tetrafluoroethyl-2,2,3,3-tetrafluoropropyl ether, 1,1,2,2-tetrafluoroethyl-2,2,2-trifluoroethyl ether, and 1H,1H,5H-octafluoropentyl-1,1,2,2-tetrafluoroethyl ether.

Examples of the non-fluorine solvent include triethylene glycol dimethyl ether, tetraethylene glycol dimethyl ether, 1,2-dimethoxyethane, dimethoxyethane, dimethoxypropane, dimethoxybutane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, triethyl phosphate, and 12-crown-4.

The fluorinated solvent and/or the non-fluorine solvent may be used alone or in a combination of two or more types thereof at any ratio. The contents of the fluorinated solvent and the non-fluorine solvent are not particularly limited, and the proportion of the fluorinated solvent to the entire solvent may be 0% to 100% by volume, and the proportion of the non-fluorine solvent to the entire solvent may be 0% to 100% by volume.

### 2. Method for manufacturing lithium secondary battery

The method for manufacturing a lithium secondary battery is not particularly limited as long as it is a method capable of manufacturing a lithium secondary battery having the above-described configuration of the battery. Examples thereof include the following method.

The above-described negative electrode 10, separator 20, and positive electrode 30 are prepared. The reagent or the like, which is used for each of the constitutional members or the members, may be manufactured by a known method in the related art, or a commercially available product may be used. The positive electrode 30, the separator 20, and the negative electrode 10 prepared as described above are laminated in this order so that the positive electrode 30 and the separator 20 face each other, thereby obtaining a laminate. The obtained laminate can be sealed in a sealing container together with the electrolyte solution to obtain a lithium secondary battery. The sealing container is not particularly limited, and examples thereof include a laminated film.

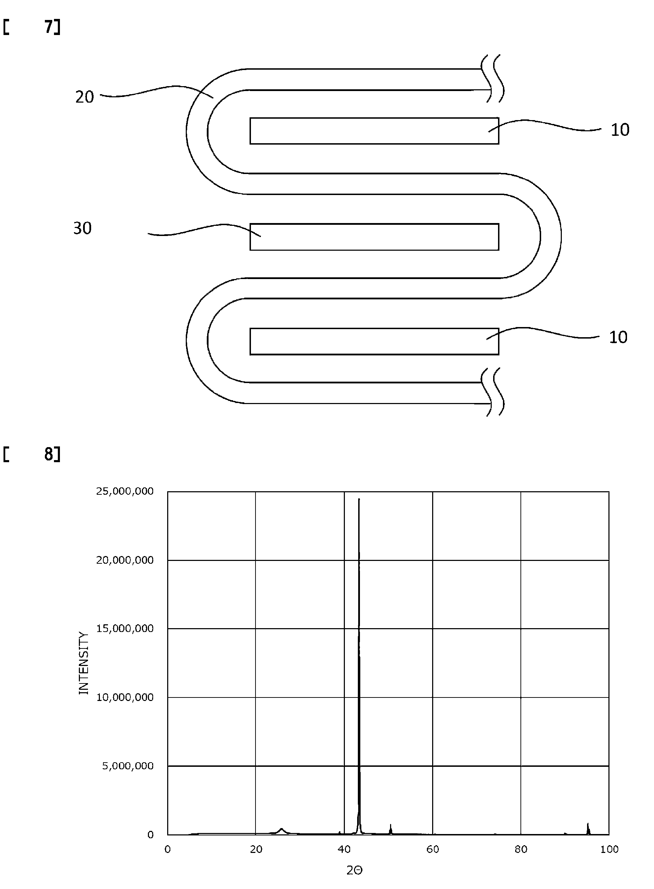

In addition, as illustrated in Figure 1, the plurality of the positive electrode 30 and the plurality of the negative electrode 10 may be alternately laminated with the separator 20 being sandwiched between the positive electrode 30 and the negative electrode 10, and as a result, the battery performance such as the energy density tends to be further improved. As the lamination method, for example, as illustrated in Figure 7, the negative electrode 10 and the positive electrode 30 may be wrapped to face the opposite side of the separator 20 without being in contact with each other, and the separator 20 may be laminated without being cut. Such lamination is preferable from the viewpoint of preventing a short circuit and improving productivity.

When producing a lithium ion battery, the lithium ion battery may be produced in the same manner as the above-described method for manufacturing the battery, except that a host material for a lithium element is used for the negative electrode 10. A method for manufacturing the negative electrode 10 having such a host material (negative-electrode active material) is not particularly limited, and is, for example, as follows. As necessary, the above-described negative-electrode active material, a binder described in detail below, a conductive auxiliary agent, and other additives are mixed to obtain a negative-electrode active material composition. The negative-electrode active material or the obtained negative-electrode active material composition is applied onto both surfaces or one surface of the negative electrode current collector and subjected to press molding to form a negative-electrode active material layer on both surfaces or one surface of the negative electrode current collector, thereby obtaining a molded body. The obtained molded body is punched into a predetermined size by punching processing to obtain the negative electrode 10 according to the present embodiment.

The lithium secondary battery according to the present embodiment can be an anode-free lithium battery, a lithium ion battery, a lithium metal battery, a lithium sulfur battery, a lithium oxygen battery, or a lithium air battery by changing the additional configuration or the member used for each configuration, and among these, the configuration of the anode-free lithium battery, the lithium ion battery, or the lithium metal battery is particularly suitable.

The shape of the battery of the lithium secondary battery according to the present embodiment is not particularly limited, and may be, for example, a sheet type, a laminated sheet type, or may have a thin shape, a bottomed cylindrical shape, a bottomed angular shape, or the like. From the viewpoint of more effectively and reliably exhibiting the effect of the present embodiment, a sheet type, a laminated sheet type, or a thin shape is preferable.

### [Examples]

Hereinafter, the present invention will be described in more detail with reference to Examples. However, the present invention is not limited to these Examples. In addition, unless otherwise specified, the operation was carried out at room temperature (25°C) and atmospheric pressure (10⁵ Pa).

### 1. Production of lithium secondary battery

Lithium-ion secondary batteries of Examples and Comparative Examples were prepared as follows.

### 1.1. Preparation of negative electrode

### 1.1.1. Preparation of negative electrode current collector

### (Example 1)

As a negative electrode current collector, a polypropylene film having a thickness of 4.5 µm obtained by injection molding was used, and vapor deposition and an electroplating treatment were carried out according to the following procedure.

First, the polypropylene film was set in a vapor deposition device, and a copper thin film having a thickness of 50 nm was formed on both surfaces of the polypropylene film. Thereafter, an electroplating treatment using copper sulfate was carried out until the thickness of the copper layer on each of the film surfaces reached 1.0 µm, thereby obtaining a current collector film. A negative-electrode active material layer was formed by a method described later, and cut out to have a size (4 cm x 4 cm) of a negative electrode body portion having a negative electrode tab lead of 0.5 cm x 3 cm, thereby obtaining a negative electrode having a thickness of 100 µm.

### (Example 2)

A polypropylene film having a thickness of 4.5 µm, which was used in Example 1, was prepared. Using this polypropylene film, sputtering and an electroplating treatment were carried out according to the following procedure.

First, the polypropylene film was set in a vacuum chamber for sputtering, copper ions were generated in the vacuum chamber, and a copper thin film having a thickness of 50 nm was formed on both surfaces of the film. Thereafter, an electroplating treatment using copper sulfate was carried out until the thickness of the copper layer on each of the film surfaces reached 1.0 µm, thereby obtaining a current collector film of Example 2. A negative-electrode active material layer was formed by a method described later, and cut out to have the same size and shape as those of the negative electrode in Example 1, thereby obtaining a negative electrode.

### (Example 3)

As a negative electrode current collector, a negative electrode current collector in which a copper thin film having a thickness of 1.0 µm was formed on both surfaces of a PET film having a thickness of 4.5 µm was prepared. Then, a negative-electrode active material layer was formed by a method described later, and cut out to have the same size and shape as those of the negative electrode in Example 1, thereby obtaining a negative electrode. Figure 8 illustrates a 2θ pattern of X-ray diffraction measurement carried out on this current collector film.

### (Example 4)

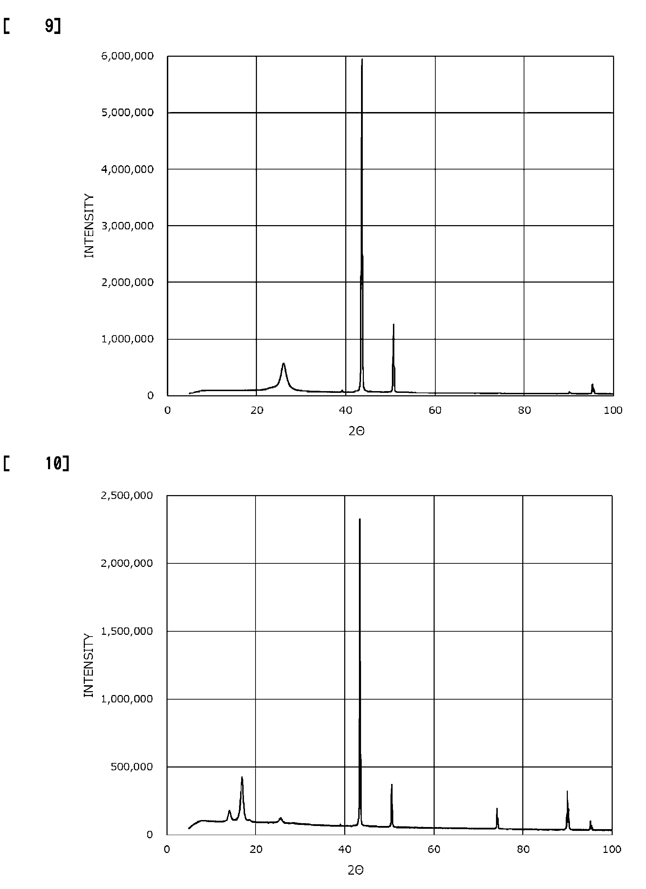

As a negative electrode current collector, a negative electrode current collector in which a copper thin film having a thickness of 1.0 µm was formed on both surfaces of a PET film having a thickness of 6.0 µm was prepared. Then, a negative-electrode active material layer was formed by a method described later, and cut out to have the same size and shape as those of the negative electrode in Example 1, thereby obtaining a negative electrode. Figure 9 illustrates a 2θ pattern of X-ray diffraction measurement carried out on this current collector film.

### (Example 5)

As a negative electrode current collector, a negative electrode current collector in which a copper thin film having a thickness of 1.0 µm was formed on both surfaces of a polypropylene film having a thickness of 4.5 µm was prepared. Then, a negative-electrode active material layer was formed by a method described later, and cut out to have the same size and shape as those of the negative electrode in Example 1, thereby obtaining a negative electrode. Figure 10 illustrates a 2θ pattern of X-ray diffraction measurement carried out on this current collector film.

### (Comparative Example 1)

As a negative electrode current collector, a PET film having a thickness of 6.0 µm obtained by injection molding was used, and vapor deposition and an electroplating treatment were carried out according to the following procedure.

First, the PET film was set in a vapor deposition device, and a copper thin film having a thickness of 50 nm was formed on both surfaces of the PET film. Thereafter, an electroplating treatment using copper sulfate was carried out until the thickness of the copper layer on each of the film surfaces reached 1.0 µm, thereby obtaining a current collector film of Comparative Example 1.

Then, a negative-electrode active material layer was formed by a method described later, and cut out to have the same size and shape as those of the negative electrode in Example 1, thereby obtaining a negative electrode.

### (Comparative Example 2)

As a negative electrode current collector, a polypropylene film having a thickness of 4.5 µm obtained by injection molding was used, and vapor deposition and an electroplating treatment were carried out according to the following procedure. First, the polypropylene film was set in a vapor deposition device, and a copper thin film having a thickness of 50 nm was formed on both surfaces of the polypropylene film. Thereafter, an electroplating treatment using copper sulfate was carried out until the thickness of the copper layer on each of the film surfaces reached 1.0 µm, thereby obtaining a current collector film of Comparative Example 2.

Then, a negative-electrode active material layer was formed by a method described later, and cut out to have the same size and shape as those of the negative electrode in Example 1, thereby obtaining a negative electrode.

### (Comparative Example 3)

As a negative electrode current collector, a polypropylene film having a thickness of 4.5 µm obtained by injection molding was used, and vapor deposition and an electroplating treatment were carried out according to the following procedure. First, the polypropylene film was set in a vapor deposition device, and a copper thin film having a thickness of 50 nm was formed on both surfaces of the polypropylene film. Thereafter, an electroplating treatment using copper sulfate was carried out until the thickness of the copper layer on each of the film surfaces reached 1.0 µm, thereby obtaining a current collector film of Comparative Example 3.

Then, a negative-electrode active material layer was formed by a method described later, and cut out to have the same size and shape as those of the negative electrode in Example 1, thereby obtaining a negative electrode.

### (Comparative Example 4)

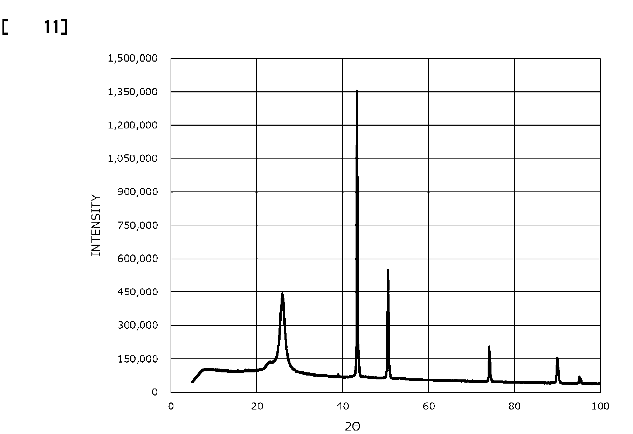

As a negative electrode current collector, a negative electrode current collector in which a copper thin film having a thickness of 1.0 µm was formed on both surfaces of a PET film having a thickness of 6.0 µm was prepared. Then, a negative-electrode active material layer was formed by a method described later, and cut out to have the same size and shape as those of the negative electrode in Example 1, thereby obtaining a negative electrode. Figure 11 illustrates a 2θ pattern of X-ray diffraction measurement carried out on this current collector film.

The negative electrode current collector film obtained above was subjected to X-ray diffraction measurement using "RINT-Ultima" manufactured by Rigaku Corporation, and the detection of each peak and the calculation of the half-value width (FWHM) were carried out by software associated with "RINT-Ultima".

### 1.1.2. Formation of negative-electrode active material layer

A negative-electrode active material composition was prepared by mixing 97.0 parts by mass of graphite as a negative-electrode active material, 0.5 parts by mass of carbon black as a conductive auxiliary agent, and 1.5 parts by mass of carboxymethyl cellulose (CMC) and 1.0 parts by mass of styrene-butadiene rubber (SBR) as binders in water as a solvent. The negative-electrode active material composition was applied and pressed onto a part of one surface of each of the negative electrode current collector films obtained above so that the weight per unit area was individually 15 mg/cm², thereby forming a negative-electrode active material layer on one surface of the negative electrode current collector. In the molded body, a portion on which the negative-electrode active material layer was formed was cut out to be a negative electrode current collector portion, and a portion on which the negative-electrode active material layer was not formed was cut out to be a negative electrode lead portion, thereby obtaining a negative electrode of each example.

### 1.2. Preparation of positive electrode

As a positive electrode current collector, a current collector film in which aluminum as a metal layer was subjected to vapor deposition to a thickness of 1.0 µm on both surfaces of a PET film having a thickness of 6.0 µm as a resin layer was used. Then, a positive-electrode active material composition was prepared by mixing 96 parts by mass of LiNi_{0.8}Co_{0.15}Al_{0.05}O₂ as a positive-electrode active material, 2 parts by mass of carbon black as a conductive auxiliary agent, and 2 parts by mass of polyvinylidene fluoride (PVDF) as a binder in N-methyl-pyrrolidone (NMP) as a solvent. This positive-electrode active material composition was applied and pressed onto one surface of the positive electrode current collector so that the weight per unit area was individually 15 mg/cm², thereby forming a positive-electrode active material layer on the one surface of the positive electrode current collector to obtain a molded body. The molded body was cut out to a predetermined size (4 cm x 4 cm). As a result, a positive electrode 30 was obtained.

### 1.3. Preparation of separator

A sheet (thickness: 15 µm, 4 cm x 4 cm) of a polyethylene microporous membrane having a surface coated with a mixture of polyvinylidene fluoride (PVDF) and Al₂O₃ was prepared as the separator 20.

### 1.4. Preparation of electrolyte solution

Lithium hexafluorophosphate (LiPF₆) was dissolved in a solvent obtained by mixing ethylene carbonate (EC) and dimethyl carbonate (DMC) at a volume ratio of 3:7 at a concentration of 1 M. In addition, lithium difluorophosphate (LiPO₂F₂) and vinylene carbonate (VC) were added to the solvent so that the content ratios with respect to the total amount of the solvent (the total mass of EC and DMC not including LiPF₆) were 1% by mass and 2% by mass, respectively. As described above, an electrolyte solution was prepared.

### 1.5. Assembly of battery

A laminate was obtained by laminating the positive electrode 30, the separator 20, and the negative electrode 10, which were obtained as described above, in this order a plurality of times so that the positive electrode 30 faced the separator 20 as illustrated in Figure 1. Then, the lead portions of each of the laminated positive electrode and negative electrode were joined by ultrasonic welding to an Al terminal of 100 µm for the positive electrode and a Ni terminal of 100 µm for the negative electrode, and the joined lead portions were inserted into a laminated exterior body. Next, the electrolyte solution obtained above was injected into the exterior body and sealed to obtain a lithium-ion secondary battery of each of Examples and Comparative Examples.

### 2. Evaluation of lithium secondary battery

### 2.1. Rate retention rate

The lithium secondary battery obtained above was subjected to initial CC charging to 4.2 V at a charging rate of 0.1 C in an environment of 25°C, and then subjected to initial CC discharging to 3.0 V at a discharging rate of 0.1 C. In addition, CC charging was carried out again to 4.2 V at 0.1 C, and CC discharging was carried out at 3 C after the completion of the charging. The ratio of the discharge capacity at a discharging rate of 3.0 C to the value of the initial discharge capacity (discharging rate at 0.1 C), which was obtained as described above, was calculated as a rate retention rate (%).

### 2.2. Tab temperature during energization

Each of the lithium secondary batteries for which the rate retention rate was measured was subjected to CC charging again to 4.2 V at a charging rate of 0.1 C, and then subjected to CC discharging to 2.5 V at a rate of 10 C. After the completion of the discharge, the temperature (°C) of the central portion of the negative electrode tab was measured after 2 minutes had elapsed. Since a lower tab temperature means less heat generation, it can be said that the tab temperature stability is excellent.

**[Table 1]**

| | Intensity ratio (B/A) | Intensity ratio (C/A) | FWHM of peak A (°) | FWHM of peak B (°) | Rate retention rate (%) | Tab temperature during energization (°C) |
|---|---|---|---|---|---|---|
| Example 1 | 0.20 | 0.30 | 0.15 | 0.15 | 88 | 42 |
| Example 2 | 0.20 | 0.10 | 0.15 | 0.50 | 87 | 44 |
| Example 3 | 0.03 | 0.00 | 0.08 | 0.11 | 86 | 45 |
| Example 4 | 0.21 | 0.00 | 0.17 | 0.15 | 85 | 44 |
| Example 5 | 0.10 | 0.07 | 0.08 | 0.10 | 87 | 43 |
| Comparative Example 1 | 0.35 | 0.10 | 0.15 | 0.15 | 70 | 80 |
| Comparative Example 2 | 0.20 | 0.10 | 0.25 | 0.60 | 68 | 80 |
| Comparative Example 3 | 0.35 | 0.30 | 0.25 | 0.15 | 60 | 85 |
| Comparative Example 4 | 0.41 | 0.13 | 0.12 | 0.18 | 65 | 81 |

As shown in Table 1, it has been confirmed that in Examples 1 to 5, which include a laminate including a plurality of negative electrodes, a plurality of separators, and a plurality of positive electrodes, and a negative electrode tab joined to a plurality of negative electrode tab lead portions extending from the laminate, the negative electrode tab lead portion is a lead portion in which a negative electrode current collector constituting the negative electrode extends from the laminate, and the negative electrode tab lead portion and the negative electrode current collector include a resin layer and a copper layer formed on both surfaces of the resin layer, and in a 2θ pattern of an X-ray diffraction measurement of the copper layer, there is a peak A at least at 42.9° or more and 43.9° or less, a ratio (B/A) of an intensity of a peak B at 50.0° or more and 51.0° or less to an intensity of the peak A is 0.3 or less, and a half-value width of the peak A is 0.2° or less, the rate characteristics and the temperature stability during energization are excellent as compared with Comparative Examples 1 to 4 in which the above-described configuration was not adopted.

### <Appendix>

The embodiment according to the present disclosure includes the following aspects.
[1] A lithium secondary battery including:
   a laminate including a plurality of negative electrodes, a plurality of separators, and
   a plurality of positive electrodes;
   a plurality of negative electrode tab lead portions extending from the laminate; and
   a negative electrode tab joined to the plurality of negative electrode tab lead portions,
   in which the negative electrode tab lead portion is a lead portion in which a negative electrode current collector constituting the negative electrode extends from the laminate,
   the negative electrode tab lead portion and the negative electrode current collector include a resin layer and a copper layer formed on both surfaces of the resin layer,
   in a 2θ pattern of an X-ray diffraction measurement of the copper layer, there is a peak A at least at 42.9° or more and 43.9° or less,
   a ratio (B/A) of an intensity of a peak B at 50.0° or more and 51.0° or less to an intensity of the peak A is 0.3 or less, and
   a half-value width of the peak A is less than 0.2°.
[2] The lithium secondary battery according to [1],
   in which a ratio (C/A) of an intensity of a peak C at 73.7° or more and 74.7° or less to the intensity of the peak A is 0.3 or less.
[3] The lithium secondary battery according to [1] or [2],
   in which a half-value width of the peak B is 0.1° or more.
[4] The lithium secondary battery according to any one of [1] to [3],
   in which an average thickness of the resin layer is 3.0 µm or more and 10.0 µm or less, and
   an average thickness of the copper layer is 0.5 µm or more and 3.0 µm or less.
[5] The lithium secondary battery according to any one of [1] to [4],
   in which the resin layer includes at least one selected from the group consisting of polyethylene terephthalate, polypropylene, polyamide, acrylic resin, polycarbonate, polyethylene, polyvinyl chloride, and polystyrene.
[6] The lithium secondary battery according to any one of [1] to [5],
   in which the resin layer consists of polyethylene terephthalate or polypropylene.
[7] The lithium secondary battery according to any one of [1] to [6],
   in which the tab lead portion is used for joining to a tab by ultrasonic welding.

### Industrial Applicability

The lithium secondary battery according to the present invention has excellent cycle characteristics and temperature stability of the tab, and thus has industrial applicability as a power storage device used for various applications.

### Reference Signs List

A, B: battery laminate
10: negative electrode
11: negative electrode tab
12: laminate of negative electrode tab lead portion
13: negative electrode tab joining portion
14: auxiliary metal foil
20: separator
30: positive electrode
101: negative electrode body portion
102: negative electrode tab lead portion
201: copper layer
202: resin layer

## Claims

1. A lithium secondary battery comprising:
a laminate including a plurality of negative electrodes, a plurality of separators, and a plurality of positive electrodes;
a plurality of negative electrode tab lead portions extending from the laminate; and
a negative electrode tab joined to the plurality of negative electrode tab lead portions,
wherein the negative electrode tab lead portion is a lead portion in which a negative electrode current collector constituting the negative electrode extends from the laminate,
the negative electrode tab lead portion and the negative electrode current collector include a resin layer and a copper layer formed on both surfaces of the resin layer,
in a 2θ pattern of an X-ray diffraction measurement of the copper layer, there is a peak A at least at 42.9° or more and 43.9° or less,
a ratio (B/A) of an intensity of a peak B at 50.0° or more and 51.0° or less to an intensity of the peak A is 0.3 or less, and
a half-value width of the peak A is 0.2° or less.

2. The lithium secondary battery according to Claim 1,
wherein a ratio (C/A) of an intensity of a peak C at 73.7° or more and 74.7° or less to the intensity of the peak A is 0.3 or less.

3. The lithium secondary battery according to Claim 1,
wherein a half-value width of the peak B is 0.5° or less.

4. The lithium secondary battery according to Claim 1,
wherein an average thickness of the resin layer is 3.0 µm or more and 10.0 µm or less, and
an average thickness of the copper layer is 0.5 µm or more and 3.0 µm or less.

5. The lithium secondary battery according to Claim 1,
wherein the resin layer includes at least one selected from the group consisting of polyethylene terephthalate, polypropylene, polyamide, acrylic resin, polycarbonate, polyethylene, polyvinyl chloride, and polystyrene.

6. The lithium secondary battery according to Claim 1,
wherein the resin layer consists of polyethylene terephthalate or polypropylene.

7. The lithium secondary battery according to Claim 1,
wherein the negative electrode tab lead portion is joined to the negative electrode tab by ultrasonic welding.

## Amended claims

### Amended claims under Art. 19.1 PCT

**1.** A lithium secondary battery comprising:
a laminate including a plurality of negative electrodes, a plurality of separators, and a plurality of positive electrodes;
a plurality of negative electrode tab lead portions extending from the laminate; and
a negative electrode tab joined to the plurality of negative electrode tab lead portions,
wherein the negative electrode tab lead portion is a lead portion in which a negative electrode current collector constituting the negative electrode extends from the laminate,
the negative electrode tab lead portion and the negative electrode current collector include a resin layer and a copper layer formed on both surfaces of the resin layer,
in a 2θ pattern of an X-ray diffraction measurement of the copper layer, there is a peak A at least at 42.9° or more and 43.9° or less,
a ratio (B/A) of an intensity of a peak B at 50.0° or more and 51.0° or less to an intensity of the peak A is 0.3 or less,
a half-value width of the peak A is 0.2° or less, and
a half-value width of the peak B is 0.5° or less.

**2.** The lithium secondary battery according to Claim 1,
wherein a ratio (C/A) of an intensity of a peak C at 73.7° or more and 74.7° or less to the intensity of the peak A is 0.3 or less.

**4.** The lithium secondary battery according to Claim 1,
wherein an average thickness of the resin layer is 3.0 µm or more and 10.0 µm or less, and
an average thickness of the copper layer is 0.5 µm or more and 3.0 µm or less.

**5.** The lithium secondary battery according to Claim 1,
wherein the resin layer includes at least one selected from the group consisting of polyethylene terephthalate, polypropylene, polyamide, acrylic resin, polycarbonate, polyethylene, polyvinyl chloride, and polystyrene.

**6.** The lithium secondary battery according to Claim 1,
wherein the resin layer consists of polyethylene terephthalate or polypropylene.

**7.** The lithium secondary battery according to Claim 1,
wherein the negative electrode tab lead portion is joined to the negative electrode tab by ultrasonic welding.
